# EUROPEAN PATENT APPLICATION

(11) **EP 4 813 820 A1**
(43) Date of publication of application: **30.09.2026**
(21) Application number: 26160878.0
(22) Date of filing: 26.02.2026
(51) Int. Cl.: B62J 11/19, B62J 45/42, B62J 45/413

(54) **SADDLE RIDING VEHICLE**

(30) Priority: 24.03.2025 CN 202510353340
(71) Applicant: HONDA MOTOR CO., LTD., Tokyo 105-8404 (JP)
(72) Inventor: KANAYAMA, Daisuke, Tokyo, 105-8404 (JP); YAMA, Takahiro, Tokyo, 105-8404 (JP); LIU, Zhu, Hefei, Anhui, 230051 (CN); FAN, Jialun, Hefei, Anhui, 230051 (CN)
(74) Representative: Kiwit, Benedikt

(57) **Abstract**

This saddle riding vehicle includes: a motor (51) configured to drive a vehicle (1); an inverter (53) configured to control the motor (51); a motor case (51A) that accommodates the motor (51); an inverter case (53A) that accommodates the inverter (53); and a power unit (50) in which the motor case (51A) and the inverter case (53A) are integrated, in which the motor case (51A) has a motor case opening (51a) that allows the inside and outside of the motor case (51A) to communicate with each other, the inverter case (53A) has an inverter case opening (53b) that allows the inside and outside of the inverter case (53A) to communicate with each other, the inverter (53) and the motor (51) are electrically connected to each other via the motor case opening (51a) and the inverter case opening (53b), and a joining surface (50a) in which the motor case opening (51a) and the inverter case opening (53b) are joined to each other is substantially perpendicular to a horizontal plane in a state in which the power unit (50) is mounted in the vehicle (1).

## Description

### CROSS-REFERENCE TO RELATED APPLICATION

The present application claims priority based on Chinese Patent Application No. 202510353340.0, filed March 24, 2025, the content of which is incorporated herein by reference.

### BACKGROUND OF THE INVENTION

### Field of the Invention

The present invention relates to a saddle riding vehicle.

### Description of Related Art

In recent years, efforts to realize a low-carbon or carbon-free society have been gaining momentum, and research and development into electrification technologies is being conducted in order to reduce CO₂ emissions and improve energy efficiency in vehicles.

In the related art, in saddle riding electric vehicles, in electromechanical integrated motors in which a controller main body that accommodates an inverter and other controllers is integrated with a motor main body that accommodates a motor, a known structure is one in which a three-phase wire connecting the controller and motor is routed through an opening formed in an upper portion of the motor main body and an opening formed in a lower portion of the controller main body, and the opening of the controller main body and the opening of the motor main body are joined via a gasket (for example, see Chinese Utility Model Registration No. 208015543).

### SUMMARY OF THE INVENTION

Incidentally, in the field of electrification technology, there was an issue with saddle riding vehicles, where the electromechanical integrated motor is easily exposed to the outside, and water can easily seep into the interior through a gap between the opening of the controller main body and the opening of the motor main body when washing the vehicle or during rain. In particular, if a joining portion between the openings of the motor main body and the controller main body is disposed horizontally to the ground, water will tend to accumulate around the opening, making it easier for the water to seep into the interior through the gap between the opening of the controller main body and the opening of the motor main body.

An aspect of the present invention is directed to providing a saddle riding vehicle that can prevent water from seeping into the interior between an opening of a controller main body and an opening of a motor main body.

In order to accomplish the above-mentioned objects, a saddle riding vehicle according to an aspect of the present invention employs the following configurations.
(1) An aspect of the present invention is a saddle riding vehicle including: a motor (51) configured to drive a vehicle (1); an inverter (53) configured to control the motor (51); a motor case (51A) that accommodates the motor (51); an inverter case (53A) that accommodates the inverter (53); and a power unit (50) in which the motor case (51A) and the inverter case (53A) are integrated, the motor case (51A) having a motor case opening (51a) that allows the inside and outside of the motor case (51A) to communicate with each other, the inverter case (53A) having an inverter case opening (53b) that allows the inside and outside of the inverter case (53A) to communicate with each other, the inverter (53) and the motor (51) being electrically connected to each other via the motor case opening (51a) and the inverter case opening (53b), and a joining surface (50a) in which the motor case opening (51a) and the inverter case opening (53b) are joined to each other being substantially perpendicular to a horizontal plane in a state in which the power unit (50) is mounted in the vehicle (1).

According to the aspect of the above-mentioned (1), in the electromechanical integrated unit in which the inverter and motor are separable, the joining surface in which the inverter and the motor are joined and through which the wiring connecting the two is inserted is approximately vertical when the joining surface is mounted on a vehicle. For this reason, water adhering to a periphery of the joining surface, which is disposed approximately vertically between the inverter case opening and the motor case opening, can quickly drain downward, preventing the water from seeping from the joining surface into the interior of the motor case and the inverter case.

(2) In the aspect of the above-mentioned (1), the motor case (51A) may include a side surface opening portion (51B) that opens in a vehicle width direction of the vehicle (1) and exposes a rotation shaft (51b) of the motor (51) and a wiring (543), the side surface opening portion (51B) may be constituted by a peripheral edge of a protrusion portion (511) protruding outward from the motor case (51A) in the vehicle width direction, and when viewed in a side view of the vehicle (1), an upper protrusion portion (51c) of the protrusion portion (511) located above the rotation shaft (51b) may be inclined downward toward the rear of the vehicle (1).

According to the aspect of the above-mentioned (2), the water adhering to the upper protrusion portion can be separated in a direction away from the motor case opening located at the front (rearward), preventing the water from seeping from the joining surface into the power unit.

(3) In the aspect of the above-mentioned (2), a lower protrusion portion (51e) of the protrusion portion (511) located below the rotation shaft (51b) may be inclined downward toward the rear of the vehicle (1).

According to the aspect of the above-mentioned (3), the water adhering to the lower protrusion portion can be separated in a direction away from the motor case opening located at the front (rearward), preventing the water from adhering to the connecting member located inside the motor case opening and inverter case opening.

(4) In the aspect of the above-mentioned (2) or (3), the inverter (53) and the motor (51) may be connected by an inverter-side wiring (542) connected to the inverter (53) and a motor-side wiring (543) connected to the motor (51), and when viewed in the vehicle width direction, a connecting part (54) to which the inverter-side wiring (542) and the motor-side wiring (543) are connected may be exposed inside the side surface opening portion (51B).

According to the aspect of the above-mentioned (4), the inverter-side wiring and motor-side wiring can be connected by accessing the inside of the side surface opening portion through the opening of the side surface opening portion, improving connection workability.

(5) In the aspect of the above-mentioned (4), the inverter-side wiring (542) may include a terminal block (545) extending from the inverter case (53A), and the motor-side wiring (543) may have flexibility.

According to the aspect of the above-mentioned (5), this makes it easier to deform the motor-side wiring having flexibility. For this reason, the motor-side wiring can be easily connected to the terminal block, improving the connection workability of the inverter-side wiring and the motor-side wiring.

(6) In the aspect of the above-mentioned (5), when viewed in the vehicle width direction, the terminal block (545) may overlap with a stator (56) of the motor (51).

According to the aspect of the above-mentioned (6), even when the terminal block and the stator are close to each other when viewed in the vehicle width direction and the area for connecting the inverter-side wiring and the motor-side wiring is narrowed, it becomes easier to connect the motor-side wiring and the inverter-side wiring.

(7) In the aspect of the above-mentioned (5) or (6), when viewed in the vehicle width direction, a side surface (50b) of the motor case (5 1A) oriented in a radial direction of the motor (51) may overlap with the terminal block (545).

According to the aspect of the above-mentioned (7), even when the terminal block and the stator are close to each other when viewed in the vehicle width direction and the area for connecting the inverter-side wiring and the motor-side wiring is narrowed, it becomes easier to connect the motor-side wiring and the inverter-side wiring.

(8) In the aspect of any one of the above-mentioned (2) to (7), when viewed in the vehicle width direction, an angle sensor (57) configured to detect a rotation angle of the motor (51) may be disposed inside the side surface opening portion (51B), and a sensor wire (546) configured to conduct a signal of the angle sensor (57) may pass through the inside of the motor case opening (51a) and the inverter case opening (53b).

According to the aspect of the above-mentioned (8), the sensor wire can be routed from the inverter case side toward the motor case together with the wiring connecting the inverter and the motor using the motor case opening and the inverter case opening. Accordingly, there is no need to provide a separate opening for the sensor wire, simplifying a routing structure of the sensor wire.

According to the aspect of the present invention, it is possible to prevent water from seeping into the interior between the opening of the controller main body and the opening of the motor main body.

### BRIEF DESCRIPTION OF THE DRAWINGS

FIG. 1 is a right side view of a motorcycle according to an embodiment of the present invention.
FIG. 2 is a side view of a power unit shown in FIG. 1.
FIG. 3 is a perspective view showing a state in which a case lid body is attached to a motor case shown in FIG. 2.
FIG. 4 is a perspective view showing a configuration of an inverter case.
FIG. 5 is a longitudinal cross-sectional view of the power unit shown in FIG. 2.
FIG. 6 is an enlarged view of a main portion in a connecting part of the power unit shown in FIG. 2.

### DESCRIPTION OF EMBODIMENTS

Hereinafter, an embodiment of the present disclosure will be described with reference to the accompanying drawings. Further, in each embodiment described below, the same reference signs are used for common parts.

In addition, in the following description, directions of forward, rearward, upward, downward, leftward, rightward, and the like, mean the same directions as in a vehicle facing in an advance direction unless the context indicates otherwise. In appropriate places in the drawings, an arrow UP indicates the upward direction of the vehicle, an arrow FR indicates the forward direction of the vehicle, and an arrow LH indicates a leftward direction of the vehicle.

### <Entire vehicle>

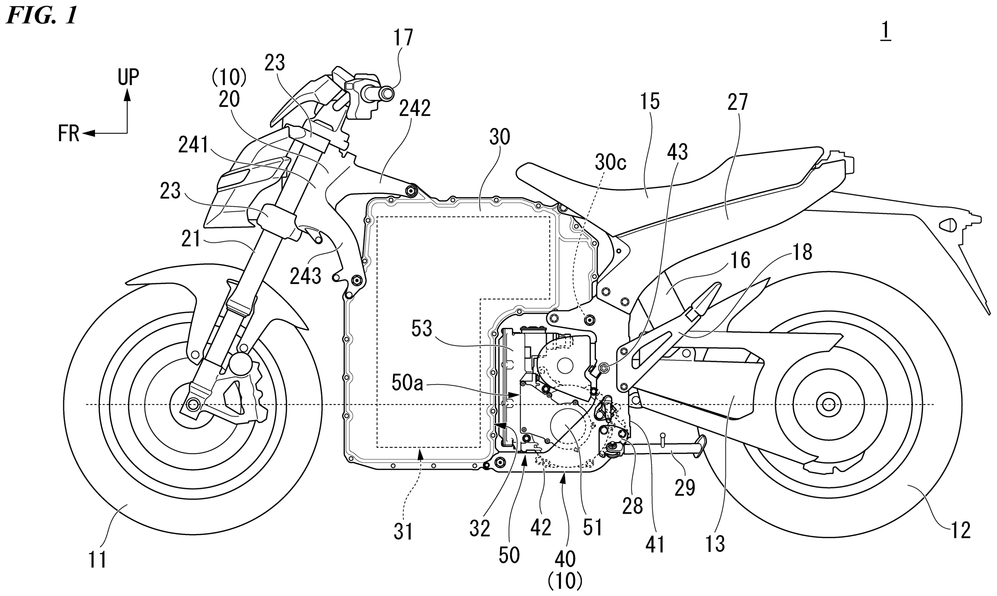

FIG. 1 is a right side view of a motorcycle 1 of the embodiment.

As shown in FIG. 1, the motorcycle 1 of the embodiment is an electric saddle riding vehicle. The motorcycle 1 includes a vehicle body frame 10, a front wheel 11, a rear wheel 12, a swing arm 13, a vehicle body cover 14, a seat 15, and a rear cushion 16.

A shaft of the front wheel 11 is supported on lower end portions of a pair of left and right front forks 21. Upper portions of the front forks 21 are steerably supported on a front end of the vehicle body frame 10 via a steering stem 23. A steering bar handle 17 is attached to an upper portion of the steering stem 23.

The motorcycle 1 includes a battery case 30 formed to accommodate a battery 31, a front frame 20 connected to a front portion of the battery case 30 and having a steering system, a rear frame 40 connected to a rear portion of the battery case and configured to swingably support the rear wheel 12 about a pivot shaft 43, and a power unit 50 configured to output driving force to the rear wheel 12 using electric power of the battery 31. The front frame 20 and the rear frame 40 are spaced apart in the forward/rearward direction, sandwiching the battery case 30 therebetween.

The vehicle body frame 10 includes a head pipe (not shown), the front frame 20, and the rear frame 40.

The head pipe is disposed on a front end of the front frame 20 in the vehicle body frame 10. The head pipe steerably supports steering system parts including the front wheel 11. The steering stem 23 is inserted through the head pipe.

The front frame 20 extends rearward from the head pipe. The front frame 20 is connected to a front upper portion of the battery case 30. The front frame 20 includes a pair of left and right upper frames 242 extending rearward from a front frame 241 and connected to a battery side surface (upper surface), and a pair of left and right lower frames 243 extending rearward and downward from the head pipe below the upper frames 242 and connected to a battery front surface side. The upper frames 242 are connected to a substantially central portion of the battery upper surface. The lower frames 243 are connected to both end portions of a battery case front surface in a vehicle width. The front frame 20 allows a fastening position and a fastening method to be changed appropriately by setting a rigidity of the vehicle body.

The rear frame 40 is disposed behind the front frame 20. The rear frame 40 is spaced apart from the front frame 20. The rear frame 40 has a pair of left and right vertical portions 41 extending upward and downward behind the power unit 50, and a pair of left and right horizontal portions 42 extending in the forward/rearward direction below the power unit 50, and is formed in substantially an L shape when viewed in a side view. The rear frame 40 is constituted by separate left and right bodies, and is attached to sandwich the power unit 50 and the battery case 30 from the outside in the vehicle width.

The battery case 30 accommodates the battery 31 that supplies electric power to a motor 51. The battery case 30 is disposed in front of the rear frame 40. The battery case 30 is connected to the front frame 20.

The battery case 30 is formed of aluminum or aluminum alloy. The battery case 30 is formed in a roughly rectangular parallelepiped shape that extends forward, rearward, upward, downward, leftward and rightward. The battery case 30 is formed larger in the upward/downward direction than in the forward/rearward direction when viewed in a side view. The battery case 30 is disposed between the front frame 20 and the rear frame 40.

The battery case 30 has a cutout concave portion 32 that, when viewed in a side view, extends forward approximately horizontally from an intermediate portion in the upward/downward direction of the rear surface of the battery case and extends upward approximately vertically from an intermediate portion in the forward/rearward direction of the lower surface of the battery case. A front side portion of the power unit 50 is disposed in the concave portion 32. That is, when viewed in a side view, the battery case 30 has a roughly L-shaped configuration with the rear lower portion of the vehicle body recessed toward the front of the vehicle body, and the power unit 50 is disposed in the concave portion 32 that forms this recess. When viewed in a side view, a roughly rectangular region is formed between the concave portion 32 and the L-shaped rear frame 40, and the power unit 50 is disposed in this region.

The swing arm 13 is provided below the rear portion of the vehicle body. The swing arm 13 extends forward and rearward. A front end portion of the swing arm 13 is vertically swingably supported on the rear frame 40 of the vehicle body frame 10. Specifically, the swing arm 13 is vertically swingably supported on a rear lower portion of the rear frame 40 via the pivot shaft 43.

The rear wheel 12 is rotatably supported on a rear end portion of the swing arm 13. The rear wheel 12 is connected to the motor 51 via a transmission mechanism (not shown) by an endless member disposed on a left side of the rear portion of the vehicle body. In the example, the endless member is a belt type transmission mechanism that uses a drive belt.

The rear cushion 16 is provided at a vehicle width center of the rear portion of the vehicle body. The rear cushion 16 is an integrated shock absorber and damper with a compression coil spring. The rear cushion 16 is interposed between the rear frame 40 and the swing arm 13. Specifically, an upper end portion of the rear cushion 16 is connected to the rear frame 40. In addition, a lower end portion of the rear cushion 16 is connected to a front portion of the swing arm 13.

The seat 15 is disposed above the power unit 50 and the rear frame 40 and behind the upper portion of the battery case 30. The seat 15 is supported by seat frames 27 supported on the rear frame 40 from below. Front ends of the seat frames 27 are fixed to a rear upper portion of the rear frame 40 and extend rearward beyond the fixed portion. The seat 15 is disposed to cover upper portions of the seat frames 27.

The seat frames 27 are provided in a pair on the left and right. The pair of seat frames 27 are fastened to a battery rear upper end portion of the battery case 30 and an upper end portion of the rear frame 40. The pair of seat frames 27 are disposed at an interval in a vehicle width direction, and extend rearward and upward from a rear end of the rear frame 40. Rear end portions of the pair of seat frames 27 are connected to each other by the rear frame 40.

### <Power unit>

The power unit 50 accommodates the motor 51 having a stator 56 and a rotor and driven by electric power of the battery. The power unit 50 is disposed behind the front frame 20 and behind the battery case 30. The power unit 50 is connected to the rear frame 40.

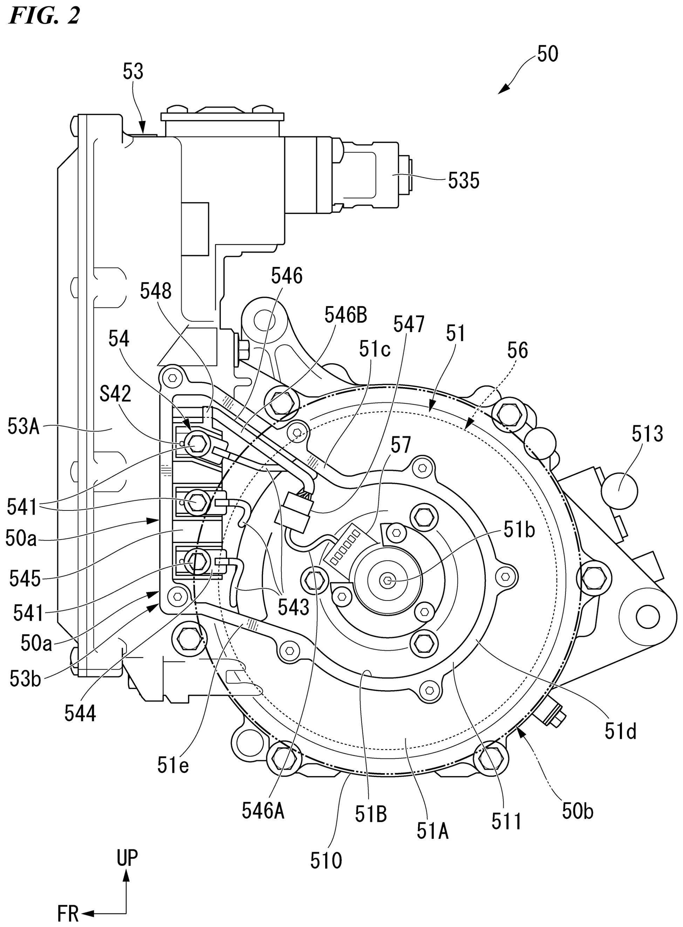

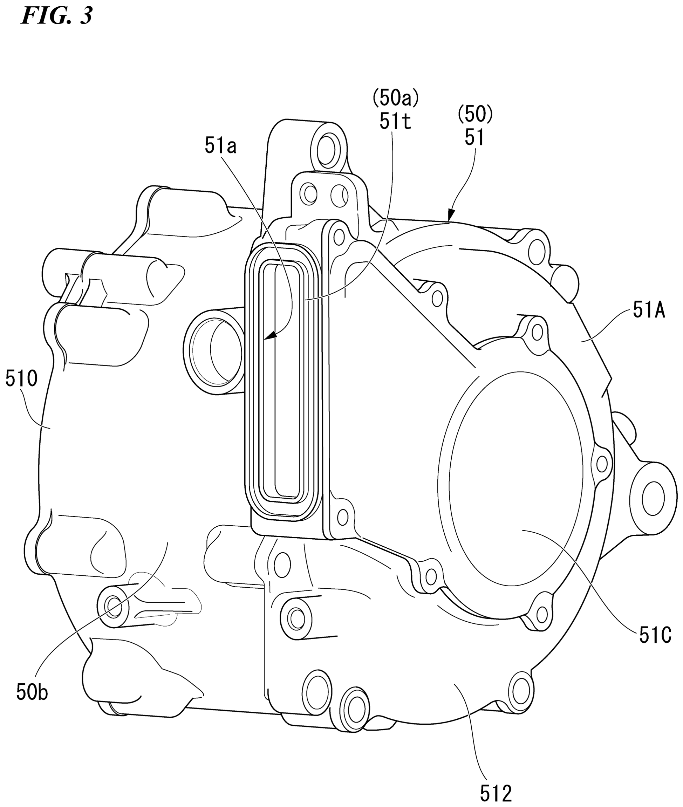

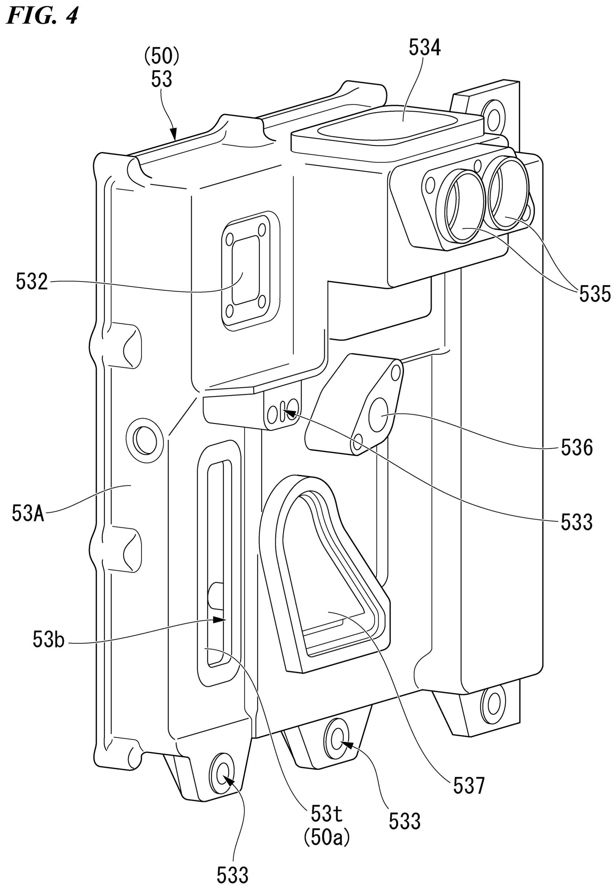

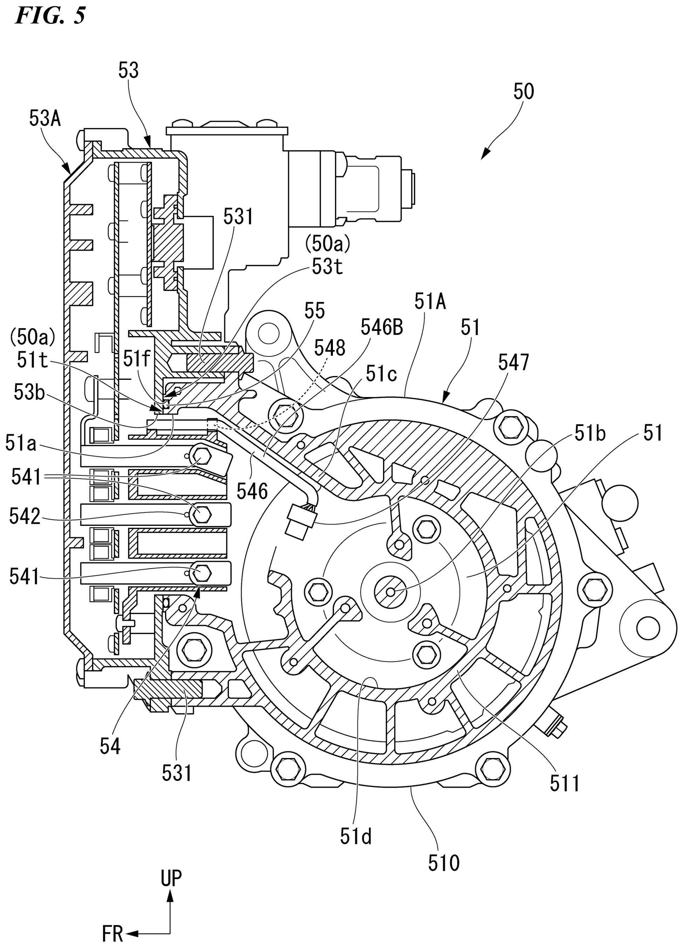

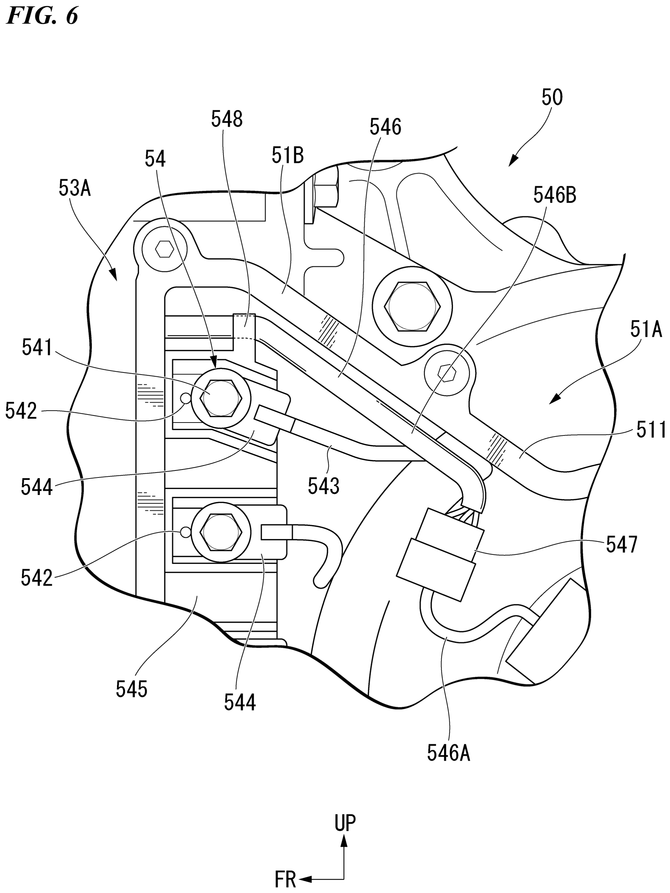

FIG. 2 is a side view of the power unit 50 shown in FIG. 1. FIG. 3 is a perspective view showing a state in which a case lid body 512 is attached to a motor case 51A shown in FIG. 2. FIG. 4 is a perspective view showing a configuration of an inverter case 53A. FIG. 5 is a longitudinal cross-sectional view of the power unit 50 shown in FIG. 2. FIG. 6 is an enlarged view of a main portion in a connecting part 54 of the power unit 50 shown in FIG. 2.

As shown in FIG. 2 and FIG. 3, a power drive unit (PDU) that is a motor driver accommodated in the power unit 50 constitutes an inverter 53. The PDU is a control device controlled by an electric control unit (ECU) or the like that controls the PDU.

As shown in FIG. 1, the power unit 50 is formed of aluminum or aluminum alloy. An upper end of the power unit 50 is disposed below an upper end of the battery case 30. In this way, the power unit 50 is disposed of while sandwiched between the rear frame 40 and the battery case 30. That is, the power unit 50 is disposed inside a closed region defined by the outer surface of the battery case 30 in the vehicle width direction and the outer edge of the rear frame 40, at least when viewed in a side view.

As shown in FIG. 2 and FIG. 5, the power unit 50 includes the motor 51 configured to drive the motorcycle 1, the inverter 53 configured to control the motor 51, the motor case 51A configured to accommodate the motor 51, and the inverter case 53A configured to accommodate the inverter 53. The power unit 50 integrates the motor case 51A and the inverter case 53A (see FIG. 4). The output of the motor 51 is transmitted to a speed reducer (not shown) that is provided separately from the power unit 50. The motor 51 is disposed in a unit rear lower portion, and a motor shaft (a rotation shaft 51b) is disposed in the vehicle width direction.

The speed reducer is disposed adjacent to the right side of the motor 51, with the output shaft facing in the vehicle width direction. The speed reducer outputs power to the rear wheel 12 via a drive pulley. The output shaft of the power unit 50 is located in front of the pivot shaft 43. The inverter 53 is disposed on a unit front portion.

As shown in FIG. 1, the power unit 50 is supported only by the vertical portions 41 of the rear frame 40 while being spaced apart from the battery case 30. Most of the power unit 50 is disposed in the space surrounded by the concave portion 32, the vertical portions 41, and the horizontal portions 42 of the battery case 30 when viewed in a side view.

As shown in FIG. 2, FIG. 3 and FIG. 5, the motor case 51A is formed with a motor case opening 51a that allows the inside and outside of the motor case 51A to communicate with each other. The motor case opening 51a is located on a front side of the motor case 51A. The motor case opening 51a is surrounded by a motor case-side joining surface 51t (corresponding to a joining surface 50a described below) along the vertical direction. A gasket 55 that matches the shape of a groove 51f of the motor case-side joining surface 51t is interposed. A surface direction of the motor case-side joining surface 51t is a direction perpendicular to a horizontal plane when viewed from the vehicle width direction, and faces an inverter case-side joining surface 53t described below.

The motor case 51A includes a bottomed cylindrical case main body 510 having an accommodating portion of the motor 51, and the case lid body 512 configured to cover an opening on a top side of the case main body 510. The case main body 510 and the case lid body 512 are detachably provided in the vehicle width direction.

The case lid body 512 of the motor case 51A includes a side surface opening portion 51B that opens in the vehicle width direction and exposes the rotation shaft 51b of the motor 51 and a wiring 543. The side surface opening portion 51B is constituted by a peripheral edge of a protrusion portion 511 protruding outward from the motor case 51A in the vehicle width direction. The protrusion portion 511 has a circular protrusion portion 51d, an upper protrusion portion 51c, and a lower protrusion portion 51e. The circular protrusion portion 51d is open at the front, is disposed coaxially with the rotation shaft 51b when viewed from the direction of the rotation shaft of the motor 51, and is formed in a substantially circular shape. The upper protrusion portion 51c, when viewed in a side view, is located above the rotation shaft 51b of the protrusion portion 511 and slopes downward toward the rear. The lower protrusion portion 51e is located below the rotation shaft 51b in the protrusion portion 511 and slopes downward toward the rear. As shown in FIG. 3, the side surface opening portion 51B is covered from the outside in the vehicle width direction by a lid body cover 51C. As shown in FIG. 2, the motor case 51A is provided with a cooling water outlet 513.

As shown in FIG. 4 and FIG. 5, the inverter case 53A is formed with an inverter case opening 53b configured to allow the inside and outside of the inverter case 53A to communicate with each other. The inverter case opening 53b is located on a rear side of the inverter case 53A. The inverter case opening 53b is surrounded by the inverter case-side joining surface 53t (corresponding to the joining surface 50a described below) along the vertical direction. The surface direction of the inverter case-side joining surface 53t is a direction perpendicular to the horizontal plane when viewed from the vehicle width direction, and faces the motor case-side joining surface 51t described above. The inverter case 53A is formed in a roughly plate shape having an accommodating portion of the inverter 53.

Each part of the inverter case 53A shown in FIG. 4 will be described. An inverter installation hole 532 is provided in an upper portion of a surface facing rearward. The inverter installation hole 532 is a hole in which a low voltage signal line connector (a signal of turning ON/OFF a switching element of the inverter 53) of the PDU (the inverter 53) is installed. The inverter case 53A is provided at various locations with a plurality of bolt holes 533 to which fastening bolts 531 for joining with the motor case 51A (see FIG. 3) are fastened.

A pair of high voltage connectors 535 are provided on the upper portion of the rearward-facing surface of the inverter case 53A. The high voltage connectors 535 are connected to the battery via a harness. The pair of high voltage connectors 535 have one connector on the positive electrode side and the other connector on the negative electrode side. A lid 534 is provided at a position adjacent to the pair of high voltage connectors 535. The lid 534 exposes the connection fastening portion between the high voltage line of the positive and negative electrodes in the PDU and the joint with the high voltage connectors 535.

A cooling water inlet 536 for injecting cooling water is provided at the central portion in the upward/downward direction of the rearward-facing surface of the inverter case 53A. A cooling water passageway 537 is provided below the cooling water inlet 536. The cooling water passageway 537 is a flow path that circulates cooling water from the inverter case 53A to the motor case 51A. Here, the inverter 53 and the motor 51 are water-cooled, and cooling water circulates through the radiator, the inverter 53, the motor 51, and the radiator in that order.

As shown in FIG. 5, the motor case opening 51a and the inverter case opening 53b are joined in a liquid-tight manner with the gasket 55 interposed therebetween. The power unit 50 is joined by abutting the motor case-side joining surface 51t, which forms a vertical surface, and the inverter case-side joining surface 53t, which forms a vertical surface, in a direction perpendicular to each vertical surface.

In the power unit 50, the inverter 53 and the motor 51 are electrically connected to each other via the motor case opening 51a and the inverter case opening 53b. When the power unit 50 is mounted on the motorcycle 1, the joining surface 50a where the motor case opening 51a and the inverter case opening 53b join together is approximately perpendicular to the horizontal plane. Here, the horizontal plane is a line connecting the installation points of the front wheel 11 and the rear wheel 12 (a dashed line shown in FIG. 1), and the range of approximately vertical is a range of 90 degrees ±5 degrees with respect to the horizontal plane.

The joining surface 50a is located on a line connecting the front wheel axle and the rear wheel axle (the dashed line shown in FIG. 1) when viewed in a side view. When the joining surface 50a is located above the line, capacity of the battery is reduced. When the joining surface 50a is located below the line, it becomes difficult to ensure a minimum ground clearance. For this reason, by disposing the joining surface 50a to be positioned on the line, it is possible to achieve both battery capacity and the minimum ground clearance.

As shown in FIG. 5 and FIG. 6, the power unit 50 has the connecting part 54 that electrically connects the inverter 53 and the motor 51. The connecting part 54 has a connecting member 541, an inverter-side wiring 542 and a motor-side wiring 543. The connecting member 541 connects the inverter-side wiring 542 connected to the inverter 53 and the motor-side wiring 543 connected to the motor 51. The inverter-side wiring 542 and the motor-side wiring 543 are each three-phase wires. These three-phase wires are wired through the motor case opening 51a formed in the motor 51 and the inverter case opening 53b formed in the inverter 53. That is, when viewed in the vehicle width direction, the connecting part 54, which connects the inverter-side wiring 542 and the motor-side wiring 543 via the connecting member 541, is exposed inside the side surface opening portion 51B (see FIG. 2). The connecting member 541 is a fastening member such as a bolt or the like. The inverter-side wiring 542 includes a terminal block 545 extending from the inverter case 53A. The motor-side wiring 543 has flexibility.

The terminal block 545 has a wall portion that blocks between each of the three-phase wires extending from within the inverter case 53A. The wall portion prevents the three-phase wires from contacting each other. The terminal block 545 is constituted by a non-conductive member. The terminal block 545 is formed of, for example, a resin. The terminal block 545 includes a sensor wire support portion 548 that supports a sensor wire 546, which will be described below, on the upper portion when viewed in a side view. The sensor wire support portion 548 clamps around the sensor wire 546 to secure it in place.

As shown in FIG. 2, when viewed in the vehicle width direction, the terminal block 545 and the stator 56 of the motor 51 are disposed to overlap each other. In addition, when viewed in the vehicle width direction, a side surface 50b of the motor case 51A oriented in the radial direction of the motor 51 overlaps with the terminal block 545.

When viewed in the vehicle width direction, an angle sensor 57 constituted by a resolver configured to detect a rotation angle of the motor 51 is disposed inside the side surface opening portion 51B. The sensor wire 546, which conducts the signal of the angle sensor 57, passes through the inside of the motor case opening 51a and the inverter case opening 53b. The sensor wire 546 includes a motor-side sensor wire 546A having one end connected to the resolver, and an inverter-side sensor wire 546B having one end connected to parts in the inverter, and the motor-side sensor wire 546A and the inverter-side sensor wire 546B are connected to each other via a connector 547 inside the side surface opening portion 51B.

Steps for assembling the power unit 50 will be described below. First, the inverter 53 and the motor 51 are separately assembled. At this time, as shown in FIG. 4, the inverter 53 is assembled with the terminal block 545, the inverter-side wiring 542, and the sensor wire 546 pulled out through the inverter case opening 53b. Next, the inverter 53 and the motor 51 are integrated by the plurality of fastening bolts 531. At this time, the terminal block 545, the inverter-side wiring 542, and the sensor wire 546 are inserted into the motor-side opening portion of the motor 51. Next, as shown in FIG. 6, the motor-side wiring 543 and the inverter-side wiring 542 are connected and the inverter-side sensor wire 546B and the motor-side sensor wire 546A are connected through the side surface opening portion 51B of the motor 51. Since the inverter-side wiring 542 and the sensor wire 546 are assembled to the motor side together with the terminal block 545, the wiring workability of the three-phase wire and the sensor wire 546 can be improved when integrating the inverter 53 and the motor 51.

As described above, the motorcycle 1 according to the embodiment is the saddle riding vehicle including the motor 51 configured to drive the vehicle 1, the inverter 53 configured to control the motor 51, the motor case 51A that accommodates the motor 51, the inverter case 53A that accommodates the inverter 53, and the power unit 50 in which the motor case 51A and the inverter case 53A are integrated, the motor case 51A having the motor case opening 51a that allows the inside and outside of the motor case 51A to communicate with each other, the inverter case 53A having the inverter case opening 53b that allows the inside and outside of the inverter case 53A to communicate with each other, the inverter 53 and the motor 51 being electrically connected to each other via the motor case opening 51a and the inverter case opening 53b, the joining surface 50a in which the motor case opening 51a and the inverter case opening 53b are joined to each other being substantially perpendicular to the horizontal plane in a state in which the power unit 50 is mounted on the vehicle 1.

According to the motorcycle 1 of the embodiment, in the electromechanical integrated unit (the power unit 50) in which the inverter 53 and the motor 51 are separable, the inverter 53 and the motor 51 are joined, and the joining surface 50a through which the wiring connecting the two is inserted becomes approximately vertical when mounted on the vehicle. For this reason, water adhering to the periphery of the joining surface 50a, which is disposed approximately vertically between the inverter case opening 53b and the motor case opening 51a, can be quickly drained downward, thereby preventing the water from seeping from the joining surface 50a into the motor case 51A and the inverter case 53A.

In the motorcycle 1, the motor case 51A includes the side surface opening portion 51B opening in the vehicle width direction of the vehicle 1 and configured to expose the rotation shaft 51b of the motor 51 and the wiring 543, the side surface opening portion 51B is constituted by the peripheral edge of the protrusion portion 511 protruding outward from the motor case 51A in the vehicle width direction, and the upper protrusion portion 51c of the protrusion portion 511 located above the rotation shaft 51b is inclined downward toward the rear of the vehicle 1 when viewed in a side view of the vehicle 1.

According to this configuration, the water adhering to the upper protrusion portion 51c can be directed in a direction (rearward) away from the motor case opening 51a located at the front, thereby preventing the water from seeping into the power unit 50 from the joining surface 50a.

In the motorcycle 1, the lower protrusion portion 51e of the protrusion portion 511 located below the rotation shaft 51b is inclined downward toward the rear of the vehicle 1.

According to this configuration, the water adhering to the lower protrusion portion 51e can be directed in a direction (rearward) away from the motor case opening 51a located at the front, thereby preventing the water from adhering to the connecting member inside the motor case opening 51a and the inverter case opening 53b.

In the motorcycle 1, the inverter 53 and the motor 51 are connected by the inverter-side wiring 542 connected to the inverter 53 and the motor-side wiring 543 connected to the motor 51, and when viewed in the vehicle width direction, the connecting part 54 to which the inverter-side wiring 542 and the motor-side wiring 543 are connected is exposed inside the side surface opening portion 51B.

According to this configuration, the inside of the side surface opening portion 51B can be accessed through the opening of the side surface opening portion 51B to connect the inverter-side wiring 542 and the motor-side wiring 543, improving connection workability.

In the motorcycle 1, the inverter-side wiring 542 includes the terminal block 545 extending from the inverter case 53A, and the motor-side wiring 543 has flexibility.

According to this configuration, the motor-side wiring 543 having flexibility is easy to deform. For this reason, the motor-side wiring 543 can be easily connected to the terminal block 545, and connection workability between the inverter-side wiring 542 and the motor-side wiring 543 is improved.

In the motorcycle 1, the terminal block 545 overlaps with the stator 56 of the motor 51 when viewed in the vehicle width direction.

According to this configuration, even when the terminal block 545 and the stator 56 are close to each other when viewed in the vehicle width direction and the region for connecting the inverter-side wiring 542 and the motor-side wiring 543 is narrowed, it is still easier to connect the motor-side wiring 543 and the inverter-side wiring 542.

In the motorcycle 1, when viewed in the vehicle width direction, the side surface 50b of the motor case 51A oriented in the radial direction of the motor 51 overlaps with the terminal block 545.

According to this configuration, even when the terminal block 545 and the stator 56 are close to each other when viewed in the vehicle width direction and the region for connecting the inverter-side wiring 542 and the motor-side wiring 543 is narrowed, it is still easier to connect the motor-side wiring 543 and the inverter-side wiring 542.

In addition, in the motorcycle 1 according to the embodiment, when viewed in the vehicle width direction, the angle sensor 57 configured to detect a rotation angle of the motor 51 is disposed inside the side surface opening portion 51B, and the sensor wire 546, which conducts the signal of the angle sensor 57, passes through the inside of the motor case opening 51a and the inverter case opening 53b.

According to this configuration, the sensor wire 546 can be routed from the inverter case side toward the motor case together with the wiring that connects the inverter 53 and the motor 51 using the motor case opening 51a and the inverter case opening 53b. Accordingly, there is no need to provide a separate opening for the sensor wire 546, and the routing structure of the sensor wire 546 can be simplified.

The present invention is not limited to the above-mentioned embodiment, and for example, the structure of the embodiment may be applied to saddle riding vehicles other than motorcycles. The saddle riding vehicle includes all vehicles in which a driver straddles the vehicle body, including motorcycles (including mopeds and scooter-type vehicles), as well as vehicles with three wheels (including vehicles with one front wheel and two rear wheels, as well as vehicles with two front wheels and one rear wheel) or four wheels (such as four-wheeled buggies). In addition, this includes not only scooter-type vehicles with straddle-over space, but also vehicles with straddle-over sections. This may also be applied to vehicles that include an electric motor as a prime mover.

Then, the configuration of the above-mentioned embodiment is an example of the present invention, and various modifications are possible without departing from the spirit of the present invention, such as replacing components of the embodiment with well-known components.

### BRIEF DESCRIPTION OF THE REFERENCE SYMBOLS

1 Motorcycle (saddle riding vehicle)
10 Vehicle body frame
20 Front frame
30 Battery case
40 Rear frame
50 Power unit
50a Joining surface
50b Side surface
51 Motor
51A Motor case
51B Side surface opening portion
51a Motor case opening
51b Rotation shaft
51c Upper protrusion portion
51d Circular protrusion portion
51e Lower protrusion portion
511 Protrusion portion
52 Speed reducer
53 Inverter
53A Inverter case
53a Inverter case opening
54 Connecting portion
541 Connecting member
542 Inverter-side wiring
543 Motor-side wiring
545 Terminal block
546 Sensor wire
56 Stator
57 Angle sensor

## Claims

1. A saddle riding vehicle comprising:
a motor (51) configured to drive a vehicle (1);
an inverter (53) configured to control the motor (51);
a motor case (51A) that accommodates the motor (51);
an inverter case (53A) that accommodates the inverter (53); and
a power unit (50) in which the motor case (51A) and the inverter case (53A) are integrated,
wherein the motor case (51A) has a motor case opening (51a) that allows the inside and outside of the motor case (51A) to communicate with each other,
the inverter case (53A) has an inverter case opening (53b) that allows the inside and outside of the inverter case (53A) to communicate with each other,
the inverter (53) and the motor (51) are electrically connected to each other via the motor case opening (51a) and the inverter case opening (53b), and
a joining surface (50a) in which the motor case opening (51a) and the inverter case opening (53b) are joined to each other is substantially perpendicular to a horizontal plane in a state in which the power unit (50) is mounted in the vehicle (1).

2. The saddle riding vehicle according to claim 1, wherein the motor case (51A) includes a side surface opening portion (51B) that opens in a vehicle width direction of the vehicle (1) and exposes a rotation shaft (51b) of the motor (51) and a wiring (543),
the side surface opening portion (51B) is constituted by a peripheral edge of a protrusion portion (511) protruding outward from the motor case (51A) in the vehicle width direction, and
when viewed in a side view of the vehicle (1), an upper protrusion portion (51c) of the protrusion portion (511) located above the rotation shaft (51b) is inclined downward toward the rear of the vehicle (1).

3. The saddle riding vehicle according to claim 2, wherein a lower protrusion portion (51e) of the protrusion portion (511) located below the rotation shaft (51b) is inclined downward toward the rear of the vehicle (1).

4. The saddle riding vehicle according to claim 2 or 3, wherein the inverter (53) and the motor (51) are connected by an inverter-side wiring (542) connected to the inverter (53) and a motor-side wiring (543) connected to the motor (51), and
when viewed in the vehicle width direction, a connecting part (54) to which the inverter-side wiring (542) and the motor-side wiring (543) are connected is exposed inside the side surface opening portion (51B).

5. The saddle riding vehicle according to claim 4, wherein the inverter-side wiring (542) includes a terminal block (545) extending from the inverter case (53A), and
the motor-side wiring (543) has flexibility.

6. The saddle riding vehicle according to claim 5, wherein, when viewed in the vehicle width direction, the terminal block (545) overlaps with a stator (56) of the motor (51).

7. The saddle riding vehicle according to claim 5 or 6, wherein, when viewed in the vehicle width direction, a side surface (50b) of the motor case (51A) oriented in a radial direction of the motor (51) overlaps with the terminal block (545).

8. The saddle riding vehicle according to any one of claims 2 to 7, wherein, when viewed in the vehicle width direction, an angle sensor (57) configured to detect a rotation angle of the motor (51) is disposed inside the side surface opening portion (51B), and a sensor wire (546) configured to conduct a signal of the angle sensor (57) passes through the inside of the motor case opening (51a) and the inverter case opening (53b).
